# EUROPÄISCHE PATENTANMELDUNG

(11) **EP 3 865 719 A1**
(43) Veröffentlichungstag der Anmeldung: **18.08.2021**
(21) Anmeldenummer: 20210583.9
(22) Anmeldetag: 30.11.2020
(51) Int. Cl.: F16B 37/12, B29C 65/08, F16B 37/06

(54) **BAUGRUPPE UMFASSEND EIN FIXIERELEMENT UND EIN EINSATZSTÜCK UND VERFAHREN ZUM HERSTELLEN EINES BAUTEILS MIT DER BAUGRUPPE**

(30) Priorität: 13.02.2020 DE 102020103835
(71) Anmelder: Vibracoustic SE, 64293 Darmstadt (DE)
(72) Erfinder: Werner, Philipp, 21339 Lueneburg (DE); Kardoes, Hilrich, 21423 Winsen (DE)
(74) Vertreter: Patentanwälte Olbricht Buchhold Keulertz

(57) **Zusammenfassung**

Die Erfindung betrifft eine Baugruppe (10) umfassend ein Fixierelement (12) und ein Einsatzstück (14), wobei das Fixierelement einen sich zwischen einer Innenseite (16) und einer Außenseite (18) des Fixierelements erstreckenden Aufnahmebereich (20) zur Aufnahme des Einsatzstücks umfasst, wobei die Innenseite (16) zum Anordnen in ein Sackloch (36) ausgebildet ist, und das Einsatzstück einen Kontaktbereich (22) aufweist, der sich entlang einer Längsachse (24) des Aufnahmebereichs entlang des Aufnahmebereichs erstreckt, wobei das Einsatzstück ein mit dem Kontaktbereich verbundenes, sich zumindest teilweise um die Längsachse erstreckendes Kragenelement (26) aufweist, das an der Innenseite angeordnet ist und das einen ersten Durchmesser aufweist, der größer als ein zweiter Durchmesser des Aufnahmebereichs ist und in Richtung der Längsachse einen Formschluss mit dem Fixierelement bildet, und das Fixierelement einen Verbindungsbereich zum Verbinden mit einem Bauteil (30) aufweist, der sich entlang einer Außenoberfläche des Fixierelements erstreckt.

## Beschreibung

Die Erfindung betrifft eine Baugruppe umfassend ein Fixierelement und ein Einsatzstück und ein Verfahren zum Herstellen eines Bauteils mit der Baugruppe.

Bauteile, die für die Verwendung mit Fluiden vorgesehen sind, weisen Kammern und Hohlräume auf, in denen die Fluide gelagert werden oder strömen. Solche Bauteile können Beispielsweise Luftfedervolumen sein, welche die Federcharakteristik einer Luftfeder beeinflussen. Fluide können insbesondere Gase, wie z. B. Luft, sein. Sind diese Bauteile aus Kunststoff hergestellt, können zur Befestigung dieser Bauteile an anderen Bauteilen Durchgangsöffnungen durch die Wände der Bauteile hergestellt werden, um Metall-Einsätze für Befestigungsmittel einzufügen. Dies kompromittiert allerdings die Dichtigkeit des Bauteils, da zwischen dem Metall-Einsatz und der Wand des Bauteils, z. B. auf Grund von Toleranzen, Leckagen auftreten können. Weiter kann auch der Metall-Einsatz Durchgangsöffnungen aufweisen, so dass zwischen dem Befestigungsmittel und dem Metall-Einsatz eine Leckage vorhanden sein kann.

Aus der DE 38 31 308 C1 ist bekannt, einen Gewindeeinsatz in eine Öffnung einer Ölwanne einzusetzen. Der Gewindeeinsatz weist einen Kragen mit einer Klebeeinrichtung auf. Mittels der Klebeeinrichtung wird der Kragen mit einer Senkung der Öffnung verbunden, um den Bereich zwischen dem Gewindeeinsatz und der Ölwanne abzudichten. Dies ist allerdings mit hohem Aufwand verbunden.

Aufgabe der Erfindung kann daher sein, eine verbesserte Vorrichtung bereitzustellen, die mit geringem Aufwand eine zugfeste und gasdichte Verbindung zwischen einem Bauteil und einem Einsatz schafft.

Hauptmerkmale der Erfindung in den Ansprüchen 1, 15 und 22 angegeben. Ausgestaltungen sind Gegenstand der Ansprüche 2 bis 14 und 16 bis 21.

Gemäß einem Aspekt der Erfindung ist eine Baugruppe umfassend ein Fixierelement und ein Einsatzstück vorgesehen, wobei das Fixierelement einen sich zwischen einer Innenseite und einer Außenseite des Fixierelements erstreckenden Aufnahmebereich zur Aufnahme eines Einsatzstücks umfasst, wobei die Innenseite zum Anordnen in ein Sackloch ausgebildet ist, und das Einsatzstück einen Kontaktbereich aufweist, der sich entlang einer Längsachse des Aufnahmebereichs entlang des Aufnahmebereichs erstreckt, wobei das Einsatzstück ein mit dem Kontaktbereich verbundenes, sich zumindest teilweise um die Längsachse erstreckendes Kragenelement aufweist, das an der Innenseite angeordnet ist und das einen ersten Durchmesser aufweist, der größer als ein zweiter Durchmesser des Aufnahmebereichs ist und in Richtung der Längsachse einen Formschluss mit dem Fixierelement bildet, und das Fixierelement einen Verbindungsbereich zum Verbinden mit einem Bauteil aufweist, der sich um die Längsachse entlang einer Außenoberfläche des Fixierelements erstreckt.

Mit der Erfindung wird eine Baugruppe bereitgestellt, bei der ein Fixierelement ein Einsatzstück, das ein Kragenelement aufweist, so weit ergänzt, dass das Einsatzstück in einem Sackloch eines Bauteils befestigt werden kann. Das Kragenelement wird dabei durch das Fixierelement gegen ein Herausreißen aus dem Bauteil gesichert. Das Fixierelement weist dazu einen Aufnahmebereich auf, der zum Aufnehmen des Einsatzstücks ausgebildet ist. Der Aufnahmebereich erstreckt sich zwischen einer Innenseite und einer Außenseite des Fixierelements und kann zum Beispiel eine Durchgangsöffnung sein. Dabei ist die Innenseite so ausgebildet, dass sie innerhalb eines Sacklochs angeordnet werden kann. Das Einsatzstück ist mit einem Kontaktbereich in dem Aufnahmebereich angeordnet, wobei der Kontaktbereich sich entlang einer Längsachse des Aufnahmebereichs erstreckt. Außerhalb des Aufnahmebereichs umfasst das Einsatzstück ein Kragenelement, das an der Innenseite des Einsatzstücks angeordnet ist und sich zumindest teilweise um die Längsachse erstreckt. Das Kragenelement weist mit dem Fixierelement einen Formschluss in Richtung der Längsachse auf. D. h., dass das Kragenelement, das an der Innenseite angeordnet ist, eine Bewegung des Einsatzstücks in Richtung der Außenseite sperrt. Das Fixierelement weist weiter einen Verbindungsbereich auf, mit dem die gesamte Baugruppe innerhalb eines Sacklochs eines Bauteils mit dem Bauteilmaterial verbunden werden kann. Dabei kann das Sackloch einstückig mit der restlichen Baugruppe ausgebildet, beispielsweise in diese hineingefräst oder bevorzugt werkzeugfallend mittels Spritzguss innerhalb der Baugruppe ausgebildet sein. Der Verbindungsbereich erstreckt sich entlang einer Außenoberfläche des Fixierelements. Das Fixierelement verbindet damit das Einsatzstück mit dem Bauteil, wobei das Kragenelement des Einsatzstücks innerhalb eines Sacklochs angeordnet werden kann, sodass das Fixierelement mit dem Kragenelement einen Formschluss bildet. Das Kragenelement ist damit innerhalb des Sacklochs befestigt. Damit wird mit einfachen Mitteln eine verbesserte Vorrichtung bereitgestellt, die mit geringem Aufwand eine zugfeste und gasdichte Verbindung zwischen dem Bauteil und einem Einsatzstück schafft.

Gemäß einem Beispiel ist der Kontaktbereich in eine in dem Aufnahmebereich angeordnete und mit dem Fixierelement formschlüssig verbundene, während des Einbettens, vorzugsweise mittels Ultraschalleinbetten, entstandene und anschließend erstarrte Kunststoffschmelze eingebettet.

Mittels der Kunststoffschmelze, die zwischen dem Fixierelement und dem Einsatzstück am Aufnahmebereich angeordnet ist, wird eine Verbindung zwischen dem Fixierelement und dem Einsatzstück bewirkt, die ohne großen Aufwand hergestellt werden kann. Wenn die Verbindung mittels Ultraschalleinbetten entsteht, vereinfacht dies die Verbindung des Einsatzstücks mit dem Fixierelement weiter. Die Kunststoffschmelze kann dabei aus dem Material des Fixierelements bestehen und bei dem Verbindungsvorgang zunächst aufgeschmolzen werden, um in den Kontaktbereich des Einsatzstücks hineinzufließen. Nach dem Erstarren verbindet die Kunststoffschmelze den Kontaktbereich mit dem Aufnahmebereich mittels Formschluss und fixiert das Einsatzstück am Fixierelement.

Weiter kann der Kontaktbereich gemäß einem anderen Beispiel in den Aufnahmebereich eingepresst oder gesteckt sein, wobei der Kontaktbereich einen dritten Durchmesser aufweist, der größer als der zweite Durchmesser oder gleich dem zweiten Durchmesser ist.

Der Kontaktbereich weist damit mindestens den gleichen Durchmesser auf, wie der Aufnahmebereich. Wenn der Kontaktbereich im Mittel einen größeren dritten Durchmesser aufweist als der Aufnahmebereich, dann ist der dritte Durchmesser so gewählt, dass der Kontaktbereich nach dem Einführen in dem Aufnahmebereich festgehalten wird. Der dritte Durchmesser ist damit nicht so groß, dass ein Einführen des Kontaktbereiches in den Aufnahmebereich blockiert wird. Mit dem dritten Durchmesser, der mindestens so groß ist wie der zweite Durchmesser, kann auf einfache Weise eine Fixierung des Kontaktbereiches im Aufnahmebereich hergestellt werden.

Gemäß einem weiteren Beispiel kann das Einsatzstück eine Durchgangsöffnung aufweisen, die sich entlang der Längsachse erstreckt.

Damit kann das Einsatzstück über seine ganze Länge eine Durchgangsöffnung aufweisen, in die zum Beispiel ein Befestigungsmittel eingeführt werden kann. Damit können Befestigungsmittel mit dem Einsatzstück verwendet werden, die die volle Länge des Sacklochs eines Bauteils ausnutzen können.

Gemäß einem weiteren Beispiel weist das Einsatzstück einen Gewindeeinsatz mit einem Innengewinde oder einen nach außen hervorstehenden Gewindebolzen mit einem Außengewinde auf, wobei das Einsatzstück und der Gewindebolzen in vorteilhafter Ausgestaltung einstückig ausgeführt sein können.

Weiter kann das Einsatzstück beispielsweise aus Metall hergestellt sein.

Damit kann ein Einsatzstück aus Metall bereitgestellt werden, das mittels des Fixierelements mit einem Kunststoff-Bauteil mittels Formschluss verbunden werden kann.

Weiter kann die Baugruppe zum Beispiel ein Verdrehsicherungselement zum Vermeiden einer Verdrehung zwischen dem Einsatzstück und dem Fixierelement aufweisen.

Das Verdrehsicherungselement kann quer zur Längsrichtung als eine Ausnehmung oder als ein Vorsprung ausgebildet sein. Alternativ kann das Verdrehsicherungselement als eine an der Innenseite des Fixierelements angeordnete Ausnehmung oder Vorsprung ausgebildet sein. Das Fixierelement weist in den oben genannten Fällen ein passendes Gegenstück zu dem Verdrehsicherungselement auf, das einen Formschluss gegen eine Verdrehung des Einsatzstücks bereitstellt.

In einem anderen Beispiel kann das Kragenelement um die Längsachse eine unrunde Geometrie aufweisen, die in einer passenden Aufnahme-Geometrie an dem Fixierelement aufgenommen wird, um eine Verdrehsicherung bereitzustellen.

Das Verdrehsicherungselement kann dabei beispielhaft am Kragenelement und/oder am Kontaktbereich angeordnet sein.

In einem weiteren Beispiel kann das Verdrehsicherungselement mindestens einen Vorsprung aufweisen, der sich von dem Einsatzstück weg in Richtung des Fixierelements erstreckt und zum Verbinden mit dem Fixierelement ausgebildet ist.

Der Vorsprung kann beim Einsetzen des Einsatzstücks in das Fixierelement in das Material des Fixierelements eingedrückt werden und auf diese Weise einen Formschluss in Umfangsrichtung um die Längsachse bereitstellen.

Gemäß einem weiteren Beispiel weist die Verdrehsicherung einen ersten Sicherungspartner an dem Einsatzstück und einen zweiten mit dem ersten Sicherungspartner zusammenwirkenden Sicherungspartner am Fixierelement auf.

Weiter kann der erste Sicherungspartner zum Beispiel einen äußeren Umfang des Kragenelements bilden, wobei der äußere Umfang eine nicht-runde Form aufweist, wobei der zweite Sicherungspartner eine den ersten Sicherungspartner aufnehmende Form aufweist.

Dabei kann der erste Sicherungspartner z. B. eckig ausgebildet sein, z. B. als 4-Kant oder als 6-Kant. Der zweite Sicherungspartner weist eine passende Gegengeometrie auf, in der der erste Sicherungspartner aufgenommen werden kann.

Die Erfindung betrifft weiter ein Bauteil mit mindestens einem Sackloch und einer Baugruppe nach der vorangegangenen Beschreibung, wobei das Sackloch einen äußeren Sacklochabschnitt mit einem vierten Durchmesser und einen inneren Sacklochabschnitt mit einem fünften Durchmesser aufweist, die zumindest teilweise mit dem Verbindungsbereich des Fixierelements stoffschlüssig verbunden sind, wobei die Baugruppe so in dem Sackloch angeordnet ist, dass der Formschluss in Richtung der Längsachse aus dem Sackloch heraus gebildet wird. Der vierte Durchmesser ist größer als der fünfte Durchmesser. Weiter ist der fünfe Durchmesser größer als der erste Durchmesser.

Gemäß einem Beispiel kann ein Energierichtungsgeber vorzugsweise entlang der Längsachse zentral zwischen dem äußeren und dem inneren Sacklochabschnitt angeordnet sein.

Der Energierichtungsgeber ist ein Abschnitt, in dem zunächst eine fein spitz zulaufende Geometrie in Kontakt mit der Baugruppe gerät. Eingebrachte Energie, z. B. mittels Reibung oder Ultraschall, führt dazu, dass die spitz zulaufende Geometrie verhältnismäßig einfach aufschmilzt. Die entstehende Schmelze erzeugt weitere Schmelze und so schmilzt der immer dicker werdende Energierichtungsgeber unter Einbringung weiterer Energie immer weiter auf und bildet schließlich ein Schmelzedepot, das zwischen den Verbindungsbereich und den äußeren und inneren Sacklochabschnitt fließt.

Denkbar ist auch, dass der Energierichtungsgeber nicht am Bauteil angeordnet ist, sondern an der korrespondieren Fläche des Fixierelementes. Dies vereinfacht die Herstellung des Energierichtungsgebers.

Der äußere Sacklochabschnitt und der innere Sacklochabschnitt können dabei zum Beispiel eine konische Form aufweisen, die sich entlang der Längsachse in einer Richtung aus dem Sackloch heraus vergrößert. Dies vereinfacht eine Positionierung des Fixierelements im Sackloch.

Wird das Fixierelement mit dem Bauteil mittels eines Schweißvorgangs verbunden, ist ein ausreichend hoher Schmelzedruck für eine feste Verbindung im Verbindungsbereich zu erzeugen. Hierfür sollte der konische Winkel nicht zu groß sein. Der Winkel der konischen Form weist in diesem Fall einen Betrag im Bereich zwischen 0,5° und 20° auf, vorzugsweise 1° bis 3°, auf.

Wird das Fixierelement mit dem Bauteil mittels eines Klebeprozesses verbunden, ist ein ausreichend hoher Anpressdruck für eine feste Verbindung im Verbindungsbereich zu erzeugen. Hierfür sollte der konische Winkel eher groß sein. Der Winkel der konischen Form weist in diesem Fall einen Betrag im Bereich zwischen 2° und 45° auf, vorzugsweise 5° bis 15°, auf.

Der äußere Sacklochabschnitt und der innere Sacklochabschnitt bilden damit Entformungsschrägen für die Herstellung des Bauteils mittels Kunststoffspritzguss. Der vierte und der fünfte Durchmesser sind in diesem Fall die Mindestdurchmesser, wobei der vierte Durchmesser dann größer als ein maximaler Durchmesser des inneren Sacklochabschnitts ist. Große Schrägen im konischen Bereich führen zu einer guten Selbstzentrierung während des Einsetzens des Fixierelementes in das Sackloch des Bauteils. Außerdem führen sie vorteilhaft dazu, dass beim ersten Kontakt im Bereich des Energierichtungsgebers noch ein großer Spalt für die Schmelze zum Ausweichen besteht. Der Spalt wird jedoch mit zunehmendem Einsenken des Fixierelementes in das Sackloch kleiner. So wird die Schmelze zunächst gut nach oben und unten verteilt, zum Ende des Einsenk-/Schweißprozesses wird hingegen ein hoher Druck erzeugt, welcher die Festigkeit der Schweißverbindung günstig beeinflusst.

Mit der Erfindung kann damit ein Einsatzstück mit einem Kragenelement in einem Bauteil angeordnet werden, ohne dass eine Durchgangsöffnung für das Einsatzstück geschaffen werden muss. Dabei kann das Kragenelement innerhalb eines Sacklochs des Bauteils mit dem Fixierelement formschlüssig gehalten werden. Durch die Verwendung eines Sackloches, welches einstückig mit dem Bauteil hergestellt ist, ist die Dichtigkeit des Innenraums des Bauteils gewährleistet.

Weitere Vorteile und Wirkungen sowie Weiterbildungen des Bauteils ergeben sich aus den Vorteilen und Wirkungen sowie Weiterbildungen der oben beschriebenen Baugruppe. Es wird daher in dieser Hinsicht auf die vorangegangene Beschreibung verwiesen.

Gemäß einem Beispiel können das Fixierelement und das Bauteil jeweils aus einem miteinander verschweißbaren Kunststoffmaterial hergestellt sein.

Das Fixierelement und das Bauteil können damit auf einfache Weise mittels Ultraschallschweißen oder Reibschweißen miteinander verbunden werden.

Weiter kann der Verbindungsbereich z. B. eine Klebeverbindung aufweisen.

Eine Klebeverbindung zwischen dem Fixierelement und dem Bauteil kann auf einfache Weise hergestellt werden. Dabei kann zum Beispiel ein Klebematerial am Verbindungsbereich und/oder am äußeren Sacklochabschnitt bzw. am inneren Sacklochabschnitt angeordnet werden. Bei Kontakt zwischen dem Verbindungsbereich und dem äußeren Sacklochabschnitt bzw. dem inneren Sacklochabschnitt kann die Klebeverbindung dann hergestellt werden. Wird die Verbindung zwischen Fixierelement und Bauteil mittels Kleben hergestellt, so ist kein Energierichtungsgeber vorzusehen. Auch können der äußere Sacklochabschnitt und der innere Sacklochabschnitt ansatzlos ineinander übergehen.

In einem weiteren Beispiel kann das Bauteil ein Luftfedertopf oder Teil eines Luftfedertopfes mit einem Innenraum sein, wobei das Sackloch außerhalb des Innenraums angeordnet ist.

Mit der Baugruppe kann damit der Luftfedertopf mit einem Karosseriebauteil eines Fahrzeugs verbunden werden. Das Einsatzstück wird dabei außen an dem Bauteil in einem Sackloch befestigt. Aufgrund des Kragenelements, das innerhalb des Sacklochs durch das Fixierelement gehalten wird, ist das Einsatzstück mit einem Formschluss am Bauteil fixiert.

Gemäß einem Beispiel kann der Kontaktbereich zylindrisch ausgeführt sein, so dass das Einsatzstück lediglich mittels einer Presspassung in dem Aufnahmebereich festgelegt werden kann. Der Kontaktbereich kann alternativ oder zusätzlich auch derart ausgeführt sein, dass er einen Formschluss in axialer Richtung und/oder gegen Torsionsbewegungen bildet. So kann der Kontaktbereich verschiedene Durchmesser aufweisen, die in axialer Richtung Hinterschnitte ausbilden, in die die während des Einsenkens des Einsatzstücks in das Fixierelement beispielsweise mittels Ultraschall, sich bildende Schmelze hineinfließen kann und so nach dem Erstarren einen Formschluss gegen Herausziehen oder Verdrehen bildet. Alternativ oder ergänzend können Längsrippen und/oder Rändelungen und/oder in einem Winkel angestellte Rippen einen Formschluss gegen Verdrehen und/oder herausziehen bilden.

Die Baugruppe kann zum Beispiel weiter eine Verdrehsicherung mit einem ersten Sicherungspartner an dem Einsatzstück und einem zweiten mit dem ersten Sicherungspartner zusammenwirkenden Sicherungspartner am Sackloch aufweisen.

Der erste Sicherungspartner kann dabei beispielsweise einen äußeren Umfang des Kragenelements bilden, wobei der äußere Umfang eine nicht-runde Form aufweist, wobei der zweite Sicherungspartner eine den ersten Sicherungspartner aufnehmende Form aufweist.

Weiter betrifft die Erfindung ein Verfahren zum Herstellen eines Bauteils nach der vorangegangenen Beschreibung, wobei das Verfahren die nachfolgenden Schritte aufweist: Erzeugen eines Sacklochs in dem Bauteil; Verbinden des Kontaktbereichs des Einsatzstücks mit dem Aufnahmebereich des Fixierelements, vorzugsweise mittels Ultraschalleinbetten oder Umspritzen des Kontaktbereichs mit Kunststoff, bis das Kragenelement entlang der Längsachse einen Formschluss mit dem Fixierelement bildet, zum Erzeugen einer Baugruppe; Einsetzen der Baugruppe in das Sackloch, wobei das Kragenelement in dem Sackloch angeordnet wird; und Erzeugen einer stoffschlüssigen Verbindung zwischen dem Verbindungsbereich und dem äußeren Sacklochabschnitt bzw. dem inneren Sacklochabschnitt.

Vorteile und Wirkungen sowie Weiterbildungen des Verfahrens ergeben sich aus den Vorteilen und Wirkungen sowie Weiterbildungen der oben beschriebenen Baugruppe und des oben beschriebenen Bauteils. Es wird daher in dieser Hinsicht auf die vorangegangene Beschreibung verwiesen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1a, b: eine schematische Schnittdarstellung der Baugruppe;
- Fig. 2a,b: eine schematische Schnittdarstellung des Bauteils;
- Fig. 3a-c: eine schematische Schnittdarstellung des Bauteils mit Verdrehsicherung;
- Fig. 4a-c: eine schematische Schnittdarstellung des Bauteils mit alternativer Verdrehsicherung;
- Fig. 5: eine schematische Schnittdarstellung eines Luftfedertopfes mit einer alternativen Baugruppe; und
- Fig. 6: ein Flussdiagramm des Verfahrens zum Herstellen eines Bauteils.

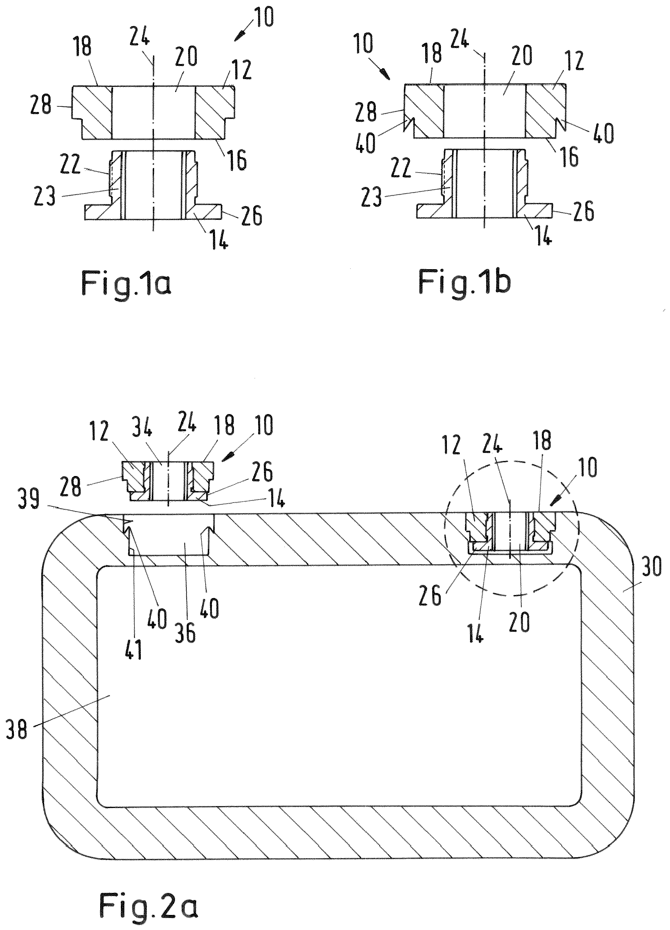

Die Baugruppe wird in ihrer Gesamtheit gemäß Figur 1a mit dem Bezugszeichen 10 referenziert.

Die Baugruppe 10 umfasst dabei ein Fixierelement 12 und ein Einsatzstück 14. Das Fixierelement 12 weist eine Außenseite 18 und eine Innenseite 16 auf, wobei die Innenseite 16 zum Anordnen innerhalb eines Sacklochs 36 ausgebildet ist. Die Außenseite 18 kann dementsprechend an einer Außenoberfläche eines Bauteils 30, beispielsweise bündig, angeordnet werden. Innerhalb des Fixierelements 12 erstreckt sich ein Aufnahmebereich 20 zwischen der Außenseite 18 und der Innenseite 16, der zur Aufnahme des Einsatzstücks 14 ausgebildet ist. Der Aufnahmebereich 20 erstreckt sich entlang einer Längsachse 24.

Das Einsatzstück 14 umfasst einen Kontaktbereich 22, der in dem Aufnahmebereich 20 angeordnet werden kann. Wenn der Kontaktbereich 22 in dem Aufnahmebereich 20 angeordnet ist, erstreckt sich der Kontaktbereich 22 entlang der Längsachse 24. Weiter umfasst das Einsatzstück 14 ein Kragenelement 26, das mit dem Kontaktbereich 22 verbunden ist. Das Kragenelement 26 erstreckt sich zumindest teilweise um die Längsachse 24. Der Kontaktbereich 22 kann weiter eine Rändelung auf seiner Oberfläche aufweisen. Die Rändelung verdrängt beim Einfügen des Kontaktbereichs 22 in den Aufnahmebereich 20 Material und erzeugt damit Hinterschnitte zwischen dem Kontaktbereich 22 und dem Aufnahmebereich 20. Alternativ oder zusätzlich kann der Kontaktbereich 22 Rippen aufweisen, die in einer Richtung parallel zur Längsachse 24 ausgebildet sind. Alternativ oder zusätzlich kann der Kontaktbereich 22 sich kreuzende Rippen aufweisen, die zu einer Richtung parallel zur Längsachse einen Winkel von 30° bis 60°, vorzugsweise 45°, aufweisen. Weiter alternativ oder zusätzlich kann der Kontaktbereich eine Durchmesseränderung entlang der Längsachse aufweisen, die Hinterschnitte bildet.

Das Kragenelement 26 weist weiter einen ersten Durchmesser auf, der größer als ein zweiter Durchmesser des Aufnahmebereichs 20 ist. Weiter ist der erste Durchmesser größer als ein mittlerer Durchmesser des Kontaktbereichs 22. Das Kragenelement 26 kann daher als Flansch ausgebildet sein, der sich von der Längsachse 24 und dem Kontaktbereich 22 weg erstreckt.

Der Kontaktbereich 22 kann in den Aufnahmebereich 20 gesteckt sein. Dabei weist das Einsatzstück 14 einen sich entlang der Längsachse 24 erstreckenden Grundzylinder 23 auf. Der Kontaktbereich 22 ragt aus dem Grundzylinder 23 hervor. Eine gestrichelt ausgeführte Linie markiert den Übergang zwischen dem Grundzylinder 23 und dem Kontaktbereich 22 sind auf der linken Seite der Figur 1. Eine Verbindung zwischen dem Kontaktbereich 22 und dem Aufnahmebereich 20 erfolgt durch Einbetten des Einsatzstücks 14 in das Fixierelement 12 mittels Ultraschall oder alternativ mittels einer Verbindung mittels Umspritzen des Einsatzstücks 14 mit Kunststoff in der Spritzgussmaschine. Wenn das Fixierelement 12 aus einem Kunststoffmaterial besteht, wird beim Ultraschalleinbetten Kunststoffmaterial des Fixierelements 12 aufgeschmolzen. Das aufgeschmolzene Kunststoffmaterial legt sich um den Kontaktbereich 22 und verbindet dabei den Kontaktbereich 22 mit dem Aufnahmebereich 20. Nach dem Erstarren des Kunststoffmaterials fixiert das Kunststoffmaterial den Kontaktbereich 22 in dem Aufnahmebereich 20 und damit das Einsatzstück 14 in dem Fixierelement 12.

Alternativ kann der Kontaktbereich 22 dabei einen dritten Durchmesser aufweisen, der größer oder mindestens gleich dem zweiten Durchmesser des Aufnahmebereichs 20 ist, wird der Kontaktbereich 22 beim Einführen in den Aufnahmebereich 20, den Aufnahmebereich 20 weiten. Dabei wird eine Pressverbindung zwischen dem Kontaktbereich 22 und dem Aufnahmebereich 20 hergestellt. Nach dem Einführen ist der Kontaktbereich 22 in diesem Fall daher durch die Pressverbindung in dem Aufnahmebereich 20 fixiert.

Alternativ oder zusätzlich kann zwischen dem Kontaktbereich 22 und dem Aufnahmebereich 20 eine Klebeverbindung vorgesehen werden. Die Klebeverbindung ist dabei so ausgebildet, dass das Material des Fixierelements 12 mit dem Material des Einsatzstücks 14 verklebt wird.

Weiter umfasst das Fixierelement 12 einen Verbindungsbereich 28 zum Verbinden mit einem Bauteil 30.

Figur 1b zeigt ein Beispiel, in dem die Baugruppe 10 am Fixierelement 12 einen Energierichtungsgeber 40 aufweist. Der Energierichtungsgeber 40 ist dabei am Verbindungsbereich 28 angeordnet. An der Außenseite 18 weist der Verbindungsbereich 28 einen größeren Durchmesser als an der Innenseite 16. Der Energierichtungsgeber 40 kann, vorzugsweise entlang der Längsachse 24 mittig, zwischen der Außenseite 18 und der Innenseite 16 angeordnet sein und einen Übergang zwischen den beiden Durchmessern bilden.

Figur 2a zeigt ein Bauteil 30 mit einem Innenraum 38. Das Bauteil 30 kann aus einem Kunststoffmaterial hergestellt sein. In eine Wand des Bauteils 30 sind auf der gegenüberliegenden Seite zum Innenraum 38 zwei Sacklöcher 36 ausgebildet. Die Sacklöcher 36 weisen jeweils einen äußeren Sacklochabschnitt 39 und einen inneren Sachlockabschnitt 41 auf. Der äußere Sacklockabschnitt 39 weist einen vierten Durchmesser auf. Der innere Sacklockabschnitt 41 umfasst einen fünften Durchmesser, der mindestens so groß wie der erste Durchmesser des Kragenelements 26 ist. In diesem Beispiel ist der Energierichtungsgeber 40 zwischen dem äußeren Sacklockabschnitt 39 und dem inneren Sacklockabschnitt 41, vorzugsweise auf einem Absatz, vorgesehen, wobei der vierte Durchmesser größer als der fünfte Durchmesser ist. Mittels des Energierichtungsgebers 40 wird eine sich beim Verbinden der Baugruppe 10 mit dem Sackloch 36 bildende Schmelze sowohl in den äußeren Sacklochabschnitt 39 als auch in den inneren Sacklockabschnitt 41 gepresst. Der Energierichtungsgeber 40 bildet dabei ein Materialdepot für die Schmelze beim Einbetten der Baugruppe 10 das Sackloch 36. Auf der linken Seite ist das Sackloch 36 leer und die Baugruppe 10 mit dem Fixierelement 12 und dem Einsatzstück 14 noch nicht in das Sackloch 36 eingesetzt.

Der Verbindungsbereich 28 des Fixierelements 12 kann zum Beispiel innerhalb eines Sackloches des Bauteils 30 mit dem Bauteil 30 verbunden werden, wie in Figur 2a auf der rechten Seite dargestellt. Weiter ist die Form des Verbindungsbereichs 28 an die Form des Sacklochs 36 mit dem äußeren und inneren Sacklochabschnitt 39, 41 angepasst. Der Verbindungsbereich 28 weist damit in diesem Beispiel einen oberen Abschnitt und einen unteren Abschnitt auf, der schmaler als der obere Abschnitt ausgebildet ist. Zwischen den beiden Abschnitten ist eine Stufe angeordnet.

Dabei wird der Verbindungsbereich 28 mit dem äußeren Sacklochabschnitt 39 und dem inneren Sachlockabschnitt 41 stoffschlüssig verbunden. Dies kann zum Beispiel mittels Ultraschalleinbetten oder einem anderen Schweißvorgang erfolgen. Dabei wird das Materialdepot, das durch den Energierichtungsgeber 40 bereitgestellt wird, aufgeschmolzen, um eine Kunststoffschmelze zu erzeugen. Die Kunststoffschmelze wird zwischen den äußeren Sacklochabschnitt 39 und den Verbindungsbereich 28 bzw. zwischen den inneren Sachlockabschnitt 41 und den Verbindungsbereich 28 gedrückt. Dabei schmilzt die Kunststoffschmelze weiteres Material sowohl am äußeren und inneren Sacklochabschnitt 39, 41 als auch am Verbindungsbereich 28 auf, so dass eine Verbindung entsteht.

Das Fixierelement 12 und das Bauteil 30 können dabei aus einer verschweißbaren Kunststoffpaarung bestehen. So kann zum Beispiel das Grundpolymer der verschweißbaren Kunststoffpaarung identisch sein, z. B. PA66 GF50 mit PA66 CF40.

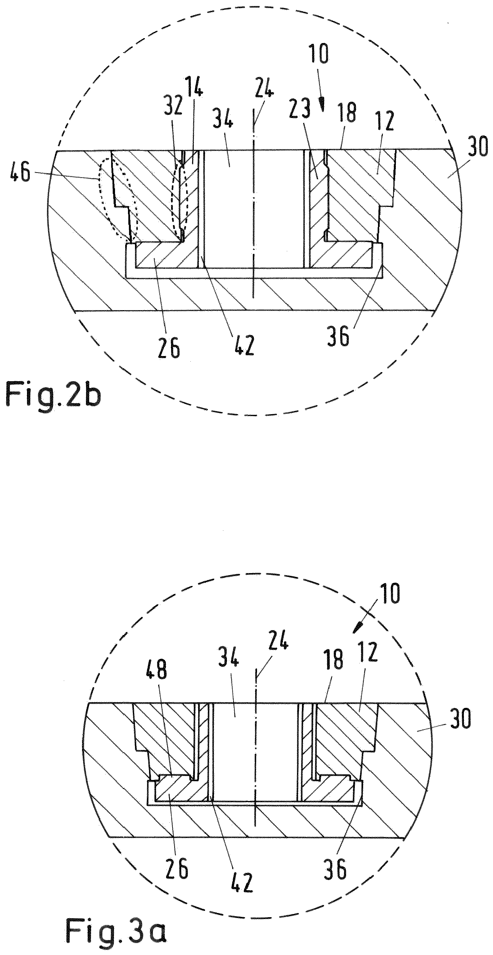

Figur 2b zeigt dabei eine Vergrößerung des in Figur 2a rechts dargestellten Sackloches 36 mit der damit stoffschlüssig verbundenen Baugruppe 10. Nach dem Erstarren der Kunststoffschmelze bildet die Kunststoffschmelze zwischen dem äußeren Sacklochabschnitt 39 bzw. dem inneren Sachlockabschnitt 41 und dem ersten Verbindungsbereich 28 eine stoffschlüssige Verbindung 46.

Das Einsatzstück 14 ist nun mit seinem Kragenelement 26 in dem Sackloch 36 angeordnet und durch das Fixierelement 12 formschlüssig gegen ein Herausreißen entlang der Längsachse 24 in Richtung der Außenseite 18 gesichert. Das Einsatzstück 14 kann dabei zum Beispiel eine Durchgangsöffnung 34 aufweisen, um über seine ganze Länge ein Befestigungsmittel aufzunehmen. Dabei kann die Durchgangsöffnung 34 zum Beispiel mit einem Innengewinde 42 versehen sein, sodass eine Schraube in das Einsatzstück 14 geschraubt werden kann.

Alternativ kann das Einsatzstück 14 ein Sackloch aufweisen (nicht dargestellt).

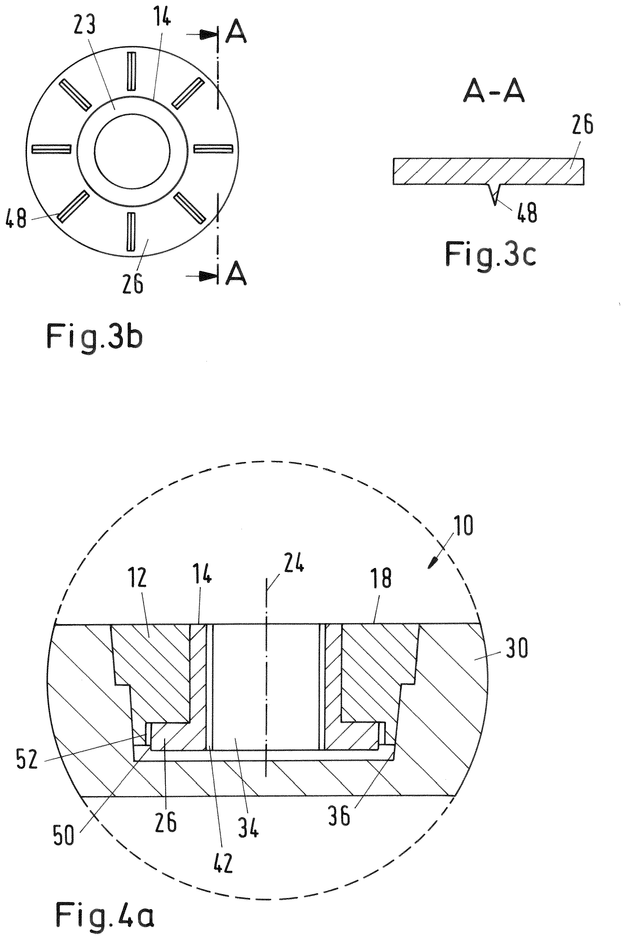

Die Figuren 3a und 3c zeigen in schematischer Ansicht eine Baugruppe 10 mit einem Verdrehsicherungselement, das als eine Vielzahl von Vorsprüngen 48 ausgebildet ist, die aus dem Kragenelement 26 hervor ragen. Der Grundzylinder 23 kann dabei einen kleineren Durchmesser als der Aufnahmebereich 20 aufweisen, so dass ein leichtes Spiel zwischen dem Kontaktbereich 22 und dem Aufnahmebereich 20 besteht. Alternativ kann der Grundzylinder 23 so ausgebildet sein, dass eine Übergangspassung oder eine Presspassung zwischen dem Aufnahmebereich 20 und dem Übergangsbereich 22 besteht.

Die Vorsprünge 48 ragen dabei aus einer dem Fixierelement 12 zugewandten Seite das Kragenelement 26 hervor, wie in Figur 3a dargestellt.

Figur 3b zeigt dabei eine Ansicht auf das Kragenelement 26 entlang der Längsachse 24 von dem Fixierelement 12 aus gesehen. Dabei sind die Vorsprünge 48 sternförmig um die Längsachse 24 angeordnet, d. h. sie erstrecken sich in radialer Richtung von der Längsachse 24 weg entlang des Kragenelements 26.

Die Vorsprünge sind dabei gemäß Figur 3c, das einen Schnitt entlang einer Sehne durch das Kragenelement 26 gemäß Figur 3b zeigt, mit einer scharfen Kante ausgebildet, sodass sie sich beim Verbinden des Einsatzstücks 14 mit dem Fixierelement 12 oder aber beim Anziehen einer Schraube im Einsatzstück 14 in das Material des Fixierelements 12 schneiden, prägen bzw. drücken. Dabei bilden sie eine Verdrehsicherung. Dabei umschließt das Material des Fixierelements 12 die Vorsprünge 48 in Umfangsrichtung um die Längsachse 24, sodass ein Formschluss in dieser Richtung entsteht.

Die Figuren 4a bis 4c zeigen in schematischer Schnittansicht eine Baugruppe 10 mit alternativen Verdrehsicherungselementen.

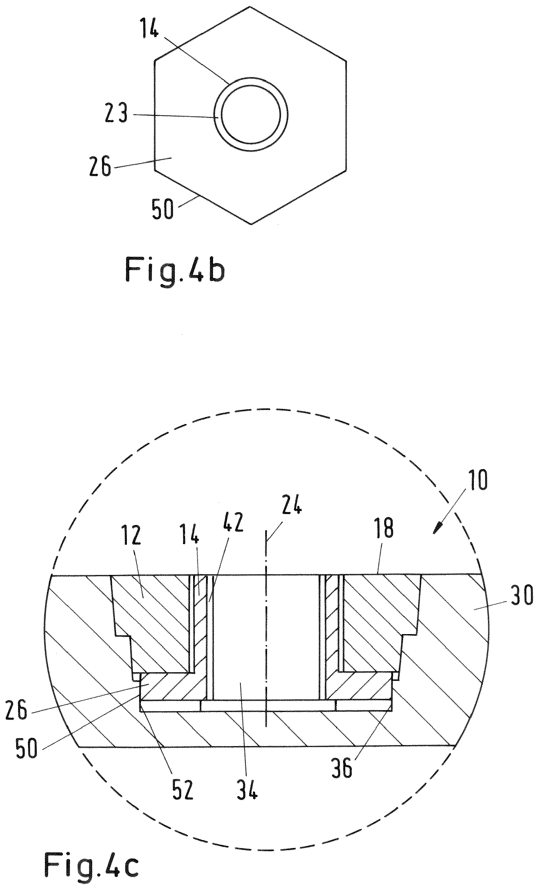

Das Verdrehsicherungselement weist dabei einen ersten Sicherungspartner 50 und einen zweiten Sicherungspartner 52 auf. Der erste Sicherungspartner 50 ist dabei am Kragenelement 26 angeordnet und bildet einen äußeren Umfang des Kragenelement 26. Der erste Sicherungspartner 50 bildet dabei einen eckigen, äußeren Umfang, zum Beispiel einen 4-Kant oder einen 6-Kant, wie beispielsweise in Figur 4b dargestellt.

Der zweite Sicherungspartner 52 ist eine Ausnehmung am Fixierelement 12, die das Kragenelement 26 aufnimmt und passend zu den ersten Sicherungspartner 50 ausgebildet ist. Es wird dabei ein Formschluss zwischen dem Kragenelement 26 und dem Fixierelement 12 bereitgestellt, der eine Verdrehung um die Längsachse 24 vermeidet. Dabei kann ein Spiel zwischen dem ersten Sicherungspartner 50 und dem zweiten Sicherungspartner 52 bestehen, um Fertigungstoleranzen auszugleichen. Es kann auch alternativ oder zusätzlich Spiel zwischen dem Grundzylinder 23 und dem Aufnahmebereich 20 vorgesehen werden. Figur 4a zeigt eine enge Aufnahme des Grundzylinders 23 und Spiel zwischen dem Kragenelement 26 bzw. dem ersten Sicherungspartner 50 und dem zweiten Sicherungspartner 52 am Fixierelement 18.

In Figur 4c ist ein alternatives Ausführungsbeispiel dargestellt. Dabei ist der zweite Sicherungspartner 52 am Sackloch 36 des Bauteils 30 angeordnet. Der zweite Sicherungspartner 52 nimmt das Kragenelement 26 nach dem Einsetzen der Baugruppe 10 in das Sackloch 36 auf und sichert das Einsatzstück 14 gegen eine Verdrehung um die Längsachse 24. In dieser Figur ist ein Spiel zwischen dem Grundzylinder 23 und dem Aufnahmebereich 20 dargestellt. Zwischen dem ersten Sicherungspartner 50 und dem zweiten Sicherungspartner 52 ist kein Spiel dargestellt. Es ist jedoch denkbar, dass alternativ oder zusätzlich zwischen dem ersten Sicherungspartner 50 und dem zweiten Sicherungspartner 52 Spiel vorgesehen wird, solange eine Sicherung gegen Verdrehen um die Längsachse 24 gewährleistet ist.

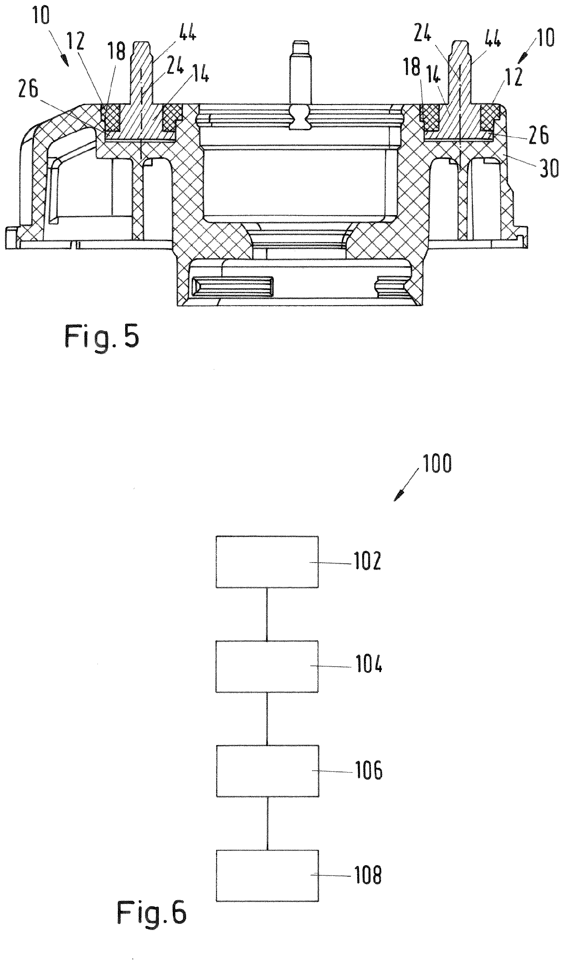

Figur 5 zeigt eine weitere Ausführungsform des Bauteils 30, wobei das Bauteil 30 als Teil eines Luftfedertopfes ausgebildet ist. Der Luftfedertopf ist aus einem Kunststoffmaterial hergestellt. Die Einsatzstücke 14 weisen in diesem Ausführungsbeispiel Gewindebolzen 44 auf, die sich von dem Kragenelement 26 des Einsatzstücks entlang der Längsachse 24 weg erstrecken. Die Gewindebolzen 44 sind an der Außenseite 18 des Fixierelements 12 angeordnet.

Figur 6 zeigt ein Flussdiagramm eines Verfahrens 100 zum Herstellen eines Bauteils.

In einem ersten Schritt 102 wird ein Sackloch in dem Bauteil erzeugt. Das Sackloch wird dabei an einer Außenoberfläche des Bauteils hergestellt und weist einen äußeren Sacklochabschnitt mit einem vierten Durchmesser und einen inneren Sacklochabschnitt mit einem fünften Durchmesser auf, der mindestens so groß wie der erste Durchmesser des Kragenelements ist. Der vierte Durchmesser ist dabei größer als der fünfte Durchmesser. Ein Übergangsbereich zwischen dem vierten und fünften Durchmesser ist zur Aufnahme eines Energierichtungsgebers ausgebildet.

In einem weiteren Schritt 104 wird in die Baugruppe hergestellt. Dabei wird ein Kontaktbereich des Einsatzstücks in den Aufnahmebereich des Fixierelements geführt. Das Kragenelement wird dabei an einer Innenseite des Fixierelements angeordnet. Die Innenseite ist dabei als die Seite definiert, die nach dem Einsetzen der Baugruppe in das Sackloch in dem Sackloch angeordnet ist. Das Kragenelement bildet dann mit dem Fixierelement entlang der Längsachse einen Formschluss. Der erste Durchmesser des Kragenelements ist dabei größer als der zweite Durchmesser des Aufnahmebereichs.

Der Kontaktbereich und der Aufnahmebereich werden miteinander verbunden. Dies kann zum Beispiel mittels Ultraschalleinbetten oder einem anderen Schweißverfahren durchgeführt werden. Alternativ oder zusätzlich kann eine Klebeverbindung zwischen dem Kontaktbereich und dem Aufnahmebereich vorgesehen werden. Weiter alternativ oder zusätzlich weist der Kontaktbereich einen größeren Durchmesser als der Aufnahmebereich auf, sodass der Kontaktbereich in den Aufnahmebereich gepresst werden kann, um darin fixiert zu werden.

Alternativ zu Schritt 104 kann das Einsatzstück mittels Kunststoffspritzguss umspritzt werden, wobei der Kunststoff das Fixierelement bildet. Dabei sind Fixierelement und Einsatzstück kraft- und/oder formschlüssig miteinander verbunden. Der Kraftschluss entsteht dadurch, dass der Kunststoff auf das Metall aufschrumpft, da der Kunststoff einen größeren Wärmeausdehnungskoeffizienten aufweist als das metallische Einsatzstück.

In einem weiteren Schritt 106 wird die Baugruppe in das Sackloch eingesetzt. Die Innenseite wird dabei innerhalb des Sacklochs angeordnet. Die Außenseite des Fixierelements weist von dem Sackloch weg. Gleichzeitig mit der Innenseite wird das Kragenelement innerhalb des Sacklochs angeordnet.

In einem weiteren Schritt 108 wird eine stoffschlüssige Verbindung zwischen dem Verbindungsbereich, der außen an dem Fixierelement angeordnet ist, und dem äußeren Sacklochabschnitt bzw. dem inneren Sacklochabschnitt erzeugt. Dabei wird mittels eines zwischen dem äußeren Sacklochabschnitt mit einem vierten Durchmesser und dem inneren Sacklochabschnitt mit dem fünften Durchmesser angeordneten Energierichtungsgebers eine Schmelze erzeugt, die durch einen Druck, der die Baugruppe in das Bauteil presst, zwischen den Verbindungsabschnitt und den äußeren Sacklochabschnitt bzw. den inneren Sacklochabschnitt gedrückt wird. Der vierte Durchmesser ist dabei größer als der fünfte Durchmesser.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 10: Baugruppe
- 12: Fixierelement
- 14: Einsatzstück
- 16: Innenseite
- 18: Außenseite
- 20: Aufnahmebereich
- 22: Kontaktbereich
- 23: Grundzylinder
- 24: Längsachse
- 26: Kragenelement
- 28: erster Verbindungsbereich
- 30: Bauteil
- 32: erstarrte Kunststoffschmelze
- 34: Durchgangsöffnung
- 36: Sackloch
- 38: Innenraum
- 39: äußerer Sacklochabschnitt
- 40: Energierichtungsgeber
- 41: innerer Sacklochabschnitt
- 42: Innengewinde
- 44: Gewindebolzen
- 46: stoffschlüssige Verbindung
- 48: Vorsprung
- 50: erster Sicherungspartner
- 52: zweiter Sicherungspartner

## Patentansprüche

1. Baugruppe umfassend ein Fixierelement (12) und ein Einsatzstück (14), wobei das Fixierelement (12) einen sich zwischen einer Innenseite (16) und einer Außenseite (18) des Fixierelements (12) erstreckenden Aufnahmebereich (20) zur Aufnahme eines Einsatzstücks (14) umfasst, wobei die Innenseite (16) zum Anordnen in ein Sackloch (36) ausgebildet ist, und das Einsatzstück (14) einen Kontaktbereich (22) aufweist, der sich entlang einer Längsachse (24) des Aufnahmebereichs (20) entlang des Aufnahmebereichs (20) erstreckt, wobei das Einsatzstück (14) ein mit dem Kontaktbereich (22) verbundenes, sich zumindest teilweise um die Längsachse (24) erstreckendes Kragenelement (26) aufweist, das an der Innenseite (16) angeordnet ist und das einen ersten Durchmesser aufweist, der größer als ein zweiter Durchmesser des Aufnahmebereichs (20) ist und in Richtung der Längsachse (24) einen Formschluss mit dem Fixierelement (12) bildet, und das Fixierelement (12) einen Verbindungsbereich (28) zum Verbinden mit einem Bauteil (30) aufweist, der sich um die Längsachse (24) entlang einer Außenoberfläche des Fixierelements (12) erstreckt.

2. Baugruppe nach Anspruch 1, **dadurch gekennzeichnet, dass** der Kontaktbereich (22) in eine in dem Aufnahmebereich (20) angeordnete und mit dem Fixierelement (12) formschlüssig verbundene, während des Einbettens, vorzugsweise mittels Ultraschalleinbetten, entstandene und anschließend erstarrte Kunststoffschmelze (32) eingebettet ist.

3. Baugruppe nach Anspruch 1 oder 2, **dadurch gekennzeichnet, dass** der Kontaktbereich (22) in den Aufnahmebereich (20) gesteckt ist, wobei der Kontaktbereich (22) einen dritten Durchmesser aufweist, der zumindest teilweise größer als der zweite Durchmesser oder gleich dem zweiten Durchmesser ist.

4. Bauteil nach einem der Ansprüche 1 bis 3, **dadurch gekennzeichnet, dass** der Kontaktbereich (22) zylindrisch ausgeführt ist.

5. Bauteil nach einem der Ansprüche 1 bis 4, **dadurch gekennzeichnet, dass** der Kontaktbereich (22) ausgebildet ist, einen Formschluss in axialer Richtung und/oder gegen Torsionsbewegungen zu bilden.

6. Bauteil nach Anspruch 5, **dadurch gekennzeichnet, dass** der Kontaktbereich (22) verschiedene Durchmesser aufweist, die entlang der Längsachse (24) Hinterschnitte ausbilden, und/oder Längsrippen und/oder Rändelungen und/oder in einem Winkel angestellte Rippen aufweist.

7. Baugruppe nach einem der Ansprüche 1 bis 6, **dadurch gekennzeichnet, dass** das Einsatzstück (14) eine Durchgangsöffnung (34) aufweist, die sich entlang der Längsachse (24) erstreckt.

8. Baugruppe nach einem der Ansprüche 1 bis 7, **dadurch gekennzeichnet, dass** das Einsatzstück (14) ein Gewindeeinsatz mit einem Innengewinde (42) ist oder einen nach außen hervorstehenden Gewindebolzen (44) mit einem Außengewinde aufweist.

9. Baugruppe nach einem der Ansprüche 1 bis 8, **dadurch gekennzeichnet, dass** das Einsatzstück (14) aus Metall hergestellt ist.

10. Baugruppe nach einem der Ansprüche 1 bis 9, **dadurch gekennzeichnet, dass** die Baugruppe (10) weiter ein Verdrehsicherungselement zum Vermeiden einer Verdrehung zwischen dem Einsatzstück (14) und dem Fixierelement (12) aufweist.

11. Baugruppe nach Anspruch 10, **dadurch gekennzeichnet, dass** das Verdrehsicherungselement am Kragenelement (26) und/oder am Kontaktbereich (22) angeordnet ist.

12. Baugruppe nach Anspruch 10 oder 11, **dadurch gekennzeichnet, dass** das Verdrehsicherungselement mindestens einen Vorsprung (48) aufweist, der sich von dem Einsatzstück (14) weg in Richtung des Fixierelements (12) erstreckt und zum Verbinden mit dem Fixierelement (12) ausgebildet ist.

13. Baugruppe nach einem der Ansprüche 10 bis 12, **dadurch gekennzeichnet, dass** die Verdrehsicherung einen ersten Sicherungspartner (50) an dem Einsatzstück (14) und einen zweiten mit dem ersten Sicherungspartner (50) zusammenwirkenden Sicherungspartner (52) am Fixierelement (12) aufweist.

14. Baugruppe nach Anspruch 13, **dadurch gekennzeichnet, dass** der erste Sicherungspartner (50) einen äußeren Umfang des Kragenelements (26) bildet, wobei der äußere Umfang eine nicht-runde Form aufweist, wobei der zweite Sicherungspartner (52) eine den ersten Sicherungspartner (50) aufnehmende Form aufweist.

15. Bauteil mit mindestens einem Sackloch (36) und einer Baugruppe (10) nach einem der vorherigen Ansprüche, wobei das das Sackloch (36) einen äußeren Sacklochabschnitt (39) mit einem vierten Durchmesser, der größer als der erste Durchmesser oder gleich dem ersten Durchmesser ist, und einen inneren Sacklochabschnitt (41) mit einem fünften Durchmesser, der kleiner als der vierte Durchmesser ist, aufweist, wobei der äußere Sacklochabschnitt (39) und der innere Sacklochabschnitt (41) mit dem Verbindungsbereich (28) des Fixierelements (12) stoffschlüssig verbunden sind, wobei die Baugruppe (10) so in dem Sackloch (36) angeordnet ist, dass der Formschluss in Richtung der Längsachse (24) aus dem Sackloch (36) heraus gebildet wird.

16. Bauteil nach Anspruch 15, **dadurch gekennzeichnet, dass** das Fixierelement (12) und das Bauteil (30) jeweils aus einem miteinander verschweißbaren Kunststoffmaterial hergestellt sind.

17. Bauteil nach einem der Ansprüche 15 bis 16, **dadurch gekennzeichnet, dass** der Verbindungsbereich eine Klebeverbindung aufweist.

18. Bauteil nach einem der Ansprüche 15 bis 17, **dadurch gekennzeichnet, dass** das Bauteil (30) ein Luftfedertopf oder Teil eines Luftfedertopfes mit einem Innenraum (38) ist, wobei das Sackloch (36) außerhalb des Innenraums (38) angeordnet ist.

19. Bauteil nach einem der Ansprüche 15 bis 18, **dadurch gekennzeichnet, dass** der äußere Sacklochabschnitt (39) und der innere Sacklochabschnitt (41) konisch geformt sind.

20. Bauteil nach einem der Ansprüche 15 bis 19, **dadurch gekennzeichnet, dass** die Baugruppe (10) eine Verdrehsicherung mit einem ersten Sicherungspartner (50) an dem Einsatzstück (14) und eine zweiten mit dem ersten Sicherungspartner (50) zusammenwirkenden Sicherungspartner (52) am Sackloch (36) aufweist.

21. Bauteil nach Anspruch 20, **dadurch gekennzeichnet, dass** der erste Sicherungspartner (50) einen äußeren Umfang des Kragenelements (26) bildet, wobei der äußere Umfang eine nicht-runde Form aufweist, wobei der zweite Sicherungspartner (52) eine den ersten Sicherungspartner (50) aufnehmende Form aufweist.

22. Verfahren zum Herstellen eines Bauteils nach einem der Ansprüche 15 bis 21, wobei das Verfahren (100) die nachfolgenden Schritte aufweist:
- Erzeugen (102) eines Sacklochs in dem Bauteil;
- Verbinden (104) des Kontaktbereichs des Einsatzstücks mit dem Aufnahmebereich des Fixierelements, vorzugsweise mittels Ultraschalleinbetten oder Umspritzen des Kontaktbereichs mit Kunststoff, bis das Kragenelement entlang der Längsachse einen Formschluss mit dem Fixierelement bildet, zum Erzeugen einer Baugruppe;
- Einsetzen (106) der Baugruppe in das Sackloch, wobei das Kragenelement in dem Sackloch angeordnet wird; und
- Erzeugen (108) einer stoffschlüssigen Verbindung zwischen dem Verbindungsbereich und dem äußeren Sacklochabschnitt sowie dem inneren Sacklochabschnitt.
